# EUROPEAN PATENT SPECIFICATION

(11) **EP 2 372 994 B1**
(45) Date of publication and mention of the grant of the patent: **28.09.2016**
(21) Application number: 11160264.5
(22) Date of filing: 29.03.2011
(51) Int. Cl.: H04M 11/02, H04M 11/04

(54) **NURSE CALL COMMUNICATION SYSTEM**
PFLEGERUFKOMMUNIKATIONSSYSTEM
SYSTÈME DE COMMUNICATION D'APPEL D'INFIRMIÈRE

(30) Priority: 31.03.2010 NL 2004487
(43) Date of publication of application: 05.10.2011
(73) Proprietor: Ascom (Sweden) AB, 402 73 Göteborg (SE)
(72) Inventor: Luik, Harold, 2402 HS, Alphen aan den Rijn (NL); Van Ee, Manolo, 3563 BH, Utrecht (NL); Van Straten, Rob Henderikus Johannes, 1991 HM, Velserbroek (NL)
(74) Representative: Jacobs, Bart

(56) References cited:
- EP-A1- 1 020 827
- JP-A- 1 076 198
- US-A1- 2008 095 156

## Description

The present invention is related to a communication system. More in particular, the present invention is related to a nurse call system with which a patient can establish a speech communication link with a nurse using a patient communication device located for instance near the bed of the patient.

Nurse call communication systems are known in the art. These systems comprise a room controller which is connected to a plurality of patient communication devices. The room controller itself is connected to a messaging/monitoring system from which the appropriate nurse can be called.

An example of a patient communication device is the well known wall mounted unit comprising various coloured buttons with which a patient can call a nurse in case of a medical emergency or when assistance is required. Most of these units also offer the nurse the possibility to acknowledge the request once they attend to the patient. In this way, the messaging/monitoring system knows that the call from the patient has been dealt with.

The requirements for nurse call communication systems have steadily increased in the last years. More and more functionality should be incorporated. For instance, other medical devices should be connectable to the same system for transferring data for remote observation. In other words, more information and functionality should be transferred from the bed of the patient to a remote location.

One solution to this problem is to use microcontrollers and the like in the patient communication device and to establish digital communication between the patient communication device and the room controller. Part of the functionality is then made possible by the microcontroller. A digital communication protocol can be used for the communication between the room controller and the patient communication device.

A drawback of using microcontrollers or other means of increasing the functionality of the patient communication devices is that the number of wires needed for communicating with the room controller increases. Furthermore, current system use dedicated wiring for each patient communication device. Added functionality requires additional power which increases the power budget of the entire system. Considering the large number of patient communication devices in a regular hospital, increased functionality comes with both economic and environmental cost.

Document US2008/0095156 A1 discloses intra-room networks with data devices and audio station, connected by packet-base network to a server.

An object of the present invention is to add the functionality of speech communication between patient and nurse in which the above stated drawbacks do not occur, or at least to a lesser extent.

This object is achieved with a communication system according to the present invention which comprises a plurality of patient communication devices wherein each device comprises a patient speaker/microphone unit and a speech communication initiation unit, which is preferably patient operable. A patient speaker/microphone unit is a unit comprising a speaker for making received speech data audible and a microphone for converting speech from the patient into an electrical signal. These units are known to the skilled person. It is also known that a single speaker can be used in combination with a driver circuit to enable both functions.

The communication system further comprises a room controller connectable to the plurality of patient communication devices using a communication bus which comprises at least one data line and a speech line. In addition, the communication system is connectable to a nurse communication device via a wired or wireless connection. An example of a nurse communication device is a well known DECT handset or a voice-over-WIFI (VoWIFI) handset.

Most hospitals today are provided with limited wiring. The present invention therefore proposes to not use dedicated wiring for each patient communication device but to use the existing wiring for constructing a communication bus to which a plurality of devices can be connected. In an embodiment of the invention, the communication bus comprises four distinct electrical wires; one wire for power supply, one wire for ground, one wire for data, and one wire for speech. It should be noted that in such configuration all signals are with respect to the common electrical ground. Any voltage drop in the ground wire is therefore detrimental to the performance.

The room controller and each patient communication device are configured to communicate data over the data line and to enable speech communication over the speech line. Data communication is based on a serial protocol using frames of data, each frame comprising an address of a patient communication device relevant for data in that frame, and active/inactive information pertaining to the relevant patient communication device.

Each frame preferably comprises a header and a payload with data. The header defines the address of the patient communication device related to the payload. The payload may comprise data such as status information from a messaging/monitoring system to the patient communication device, but it may also comprise data sent back by the patient communication device to the room controller. To that end, the patient communication device is configured for synchronous communication. A training sequence of bits generated by the room controller may be comprised in the frame allowing the patient communication device to get synchronised. By reserving bits in the payload for communication from the patient communication device back to the room controller bi-directional communication is made possible.

Each patient speaker/microphone unit can be set in an active or inactive mode depending on the active/inactive information addressed to the corresponding patient communication device. In this way, conflicting speech sessions from the plurality of patient communication devices using the same communication bus are avoided. Only a single speaker/microphone unit can be set to active for a given communication bus.

The speech communication initiation unit is provided to enable a patient to express his intentions to set up a speech communication link with a nurse. This unit may be operable by the patient using physical interaction with the unit. It is configured to send an initiation signal, such as an electrical signal, to the room controller over the data line for requesting speech communication with a nurse.

The room controller is configured to set the active/inactive information to active for the relevant patient communication device once the request has been approved by the nurse, and to establish a speech communication link between the nurse communication device and the relevant patient communication device over the speech line. After the room controller has received the initiation signal, it may relay this signal to the nurse communication device either directly or via a messaging system. For example, the room controller may provide a signal to a messaging/monitoring system indicating the address of the patient communication device from which the initiation signal originated. The messaging/monitoring system may then page a nurse responsible for that patient. Once the nurse has approved the signal, for instance by initiating speech communication with the relevant patient communication device, the room controller establishes a speech communication link between the nurse communication device and the relevant patient communication device over the speech line.

Preferably, an audible signal is produced at least at the side of the patient indicating that a speech communication is about to be set up. This guarantees the privacy of the patient and prevents that the nurse is able to listen to the patient and his surroundings without the patient being aware.

In an embodiment of a speech communication initiation unit according to the invention, an electrical circuit with a switching element is provided-configured to send an electrical initiation signal to the room controller when the switching element is operated by the patient. The switching element can for instance be a push button.

The patient communication device comprises a speaker/microphone unit. As such, full duplex communication is possible. Typically, echo cancellers are used to reduce feedback in these systems. However, half duplex has the advantage that it does not depend on acoustic parameters than can influence the echo canceller. This means that the sound pressure level can be very high without the system beginning to haul due to feedback.

To provide half duplex functionality, the room controller and patient communication device are preferably configured to communicate data comprising speech direction information over the communication bus. A bit set to a logic high or low value can for instance be used indicating the direction of speech. The speaker/microphone unit of the patient communication device is configured to toggle, in dependence of the speech direction information, between a speaker mode and a microphone mode.

When in speaker mode, the speaker/microphone unit acts as a speaker. In case the unit comprises a separate microphone and speaker, the former is inactive. Alternatively, when in microphone mode, the speaker/microphone unit acts as a microphone. In case the unit comprises a separate microphone and speaker, the latter is inactive. Accordingly, in the abovementioned embodiment, half duplex communication is possible allowing a large dynamic range to be employed without additional measures.

The speech direction information is preferably part of the data in a frame. As this information is not limited to a particular patient communication device or room controller but is relevant to the entire communication bus, it is advantageous if each patient communication device is configured to process the speech direction information comprised in each frame irrespective of the patient communication device address. Hence, the speech information need not be in the payload per se but can also be in the general header part.

Speech is transferred substantially continuously over a dedicated speech wire, whereas data over the data wire(s) is segmented into frames which are patient communication device specific. It is therefore important to toggle speech direction as fast as possible to avoid loss of speech due to the fact that a patient communication device has to wait until the frame targeted at that specific device arrives. Each patient communication device is therefore preferably arranged to process the speech direction bit irrespective whether the current frame is targeted at that patient communication device.

To set the speech direction information, the communication system according to the present invention is provided with a speech direction unit.

In an embodiment of the invention, the speech direction unit is arranged in the room controller. It is responsive to a command issued by the nurse for setting the speech direction from the nurse to the patient. The speech direction unit is configured to have a speech direction from patient to nurse as default speech direction.

During speech communication, a nurse may issue a command to force the speech direction from nurse to patient. As such, the nurse communication unit acts as a master. The direction unit is configured such that a default condition exists in absence of any command from a nurse. In the present embodiment, this direction is from the patient to the nurse. Suitable means can be applied to ensure that the speech direction can be set back to the default direction. This is either initiated by the nurse or by the communication system itself.

A possible implementation of such means involves the room controller comprising a speech detector for detecting speech of the nurse. The speech direction unit is then configured to restore the speech direction to the direction from the patient to the nurse after a predetermined amount of time has lapsed in which the speech detector has not detected speech.

In another embodiment, the speech direction unit is arranged in each patient communication device and is responsive to a command issued by the patient for setting the speech direction from the patient to the nurse. In this case, the speech direction unit is configured to have a speech direction from nurse to patient as default speech direction. Also here, suitable means can be applied to ensure that the speech direction can be set back to the default direction.

A possible implementation of such means involves the room controller comprising a speech detector for detecting speech of the patient. The speech direction unit is then configured to restore the speech direction to the direction from the nurse to the patient after a predetermined amount of time has lapsed in which the speech detector has not detected speech.

The command used for directing the speech direction is preferably generated by the speech detector once speech from the nurse or patient is detected. Other possibilities include dedicated switches on or in the patient communication device or nurse communication device, such as externally operable switchable elements.

Switching between speech directions and or between active and inactive modes may introduce switching delays. If too large, these switching delays may result in the loss of the first spoken syllables. To prevent this problem, the room controller may be provided with a buffer for storing a predetermined amount of detected speech. The room controller is then configured to deliver contents of the buffer as speech to the patient or nurse after a command for toggling the speech direction has been received from the nurse or patient, respectively.. Similarly, the same feature may be applied when toggling between active and inactive modes. By using a buffer, speech is always received with a predetermined delay substantially corresponding to the abovementioned toggling delay plus any delay introduced by the network itself.

With the previous embodiments, it was the patient who could initiate a speech communication link. However, it may be advantageous if the nurse communication device comprises similar features, i.e. a nurse speech communication initiation unit. Then, the room controller can be configured to set the active/inactive information to active for the relevant patient communication device and to establish a speech communication link over the speech line between the nurse communication device and the patient communication device in response to an incoming request for speech communication from the nurse. Like with initiation from the patient, the room controller preferably receives information regarding the address of the patient communication device.

The room controller is preferably provided with a first database comprising a correlation between an address of a patient communication device and contact information for at least one nurse to be contacted when speech communication is desired by.a patient. Such contact information could include a telephone number or paging number. Additional or alternative information could be stored such as the name of the patient or the location of the patient, and/or the phone number or any other contact information required by the nurse to contact the relevant patient communication device.

As stated before, the communication system of the present invention may comprise a messaging/monitoring system to which a plurality of the aforementioned room controllers can be connected. The messaging/monitoring system may be configured for receiving from the first database contact information for contacting at least one nurse. The messaging/monitoring system may additionally or alternatively be configured for receiving contact information from the room controller for contacting the patient communication device from which an initiation signal has been issued by said nurse communication device. It may also be configured for establishing a speech communication link via the room controller and via the speech line between the patient communication device from which the initiation signal was issued and a nurse communication device in accordance with the contact information for the at least one nurse and contact information for the patient communication device. As mentioned before, the contact information for contacting the patient communication device may be obtained from the first database if this information is stored therein.

In an embodiment, the messaging/monitoring system comprises a SIP server and the room controller comprises a SIP client. SIP, which is an acronym or abbreviation for session initiation protocol, allows the establishment of voice over IP (VoIP) communication sessions. As such, the SIP server should be configured to request the SIP client to establish a speech communication link between the patient communication device from which the initiation signal has been issued and the nurse communication device using VoIP.

Preferably, the room controller with SIP client described above comprises a codec for decoding VoIP speech data received from the nurse communication device into speech data to be transferred over the speech line to the addressed patient communication device. The codec is also configured for encoding speech received from the patient communication device over the speech line into speech data to be transferred to the nurse communication device via VoIP.

The SIP server is preferably configured for maintaining a second database comprising a correlation between a phone number to be called by the nurse communication device for contacting a patient communication device and an address of this patient communication device or an address of the room controller to which this patient communication device is connected for enabling the VoIP communication. The address of the patient communication device may comprise a unique address based on a unique identifier. However, it may also be possible to use a composite address having a first identifier part identifying the room controller, and a second part identifying the patient communication device which is connected to the room controller. With the latter system there is no need for each patient communication device to have a separate or absolute address outside of the communication bus. For example, a composite address may comprise as first part the IP address of the room controller in the hospital network. The second part may be the internal address of the patient communication device in the communication bus, e.g. patient communication device number 4.

It is advantageous if the room controller is configured to transmit speech communication from the nurse communication device to all connected patient communication devices when the speech communication is targeted at a predefined broadcasting address. To that end, the room controller may be configured to set all the connected patient communication devices to active, and where applicable, the speech direction from nurse to patient, once such speech communication is received. This allows the nurse to broadcast speech to all relevant patient communication devices, for example in case of an emergency.

Next, the invention will be described in more detail under reference to the accompanying drawings, wherein:
Figure 1 illustrates a schematic overview of the communication system of the present invention;
Figure 2 illustrates a frame used for the serial communication in the embodiment of figure 1;
Figure 3 illustrates an embodiment of a patient communication device according to the present invention;
Figure 4 shows an embodiment of a room controller according to the present invention; and
Figure 5 shows an embodiment of a messaging/monitoring system according to the present invention;

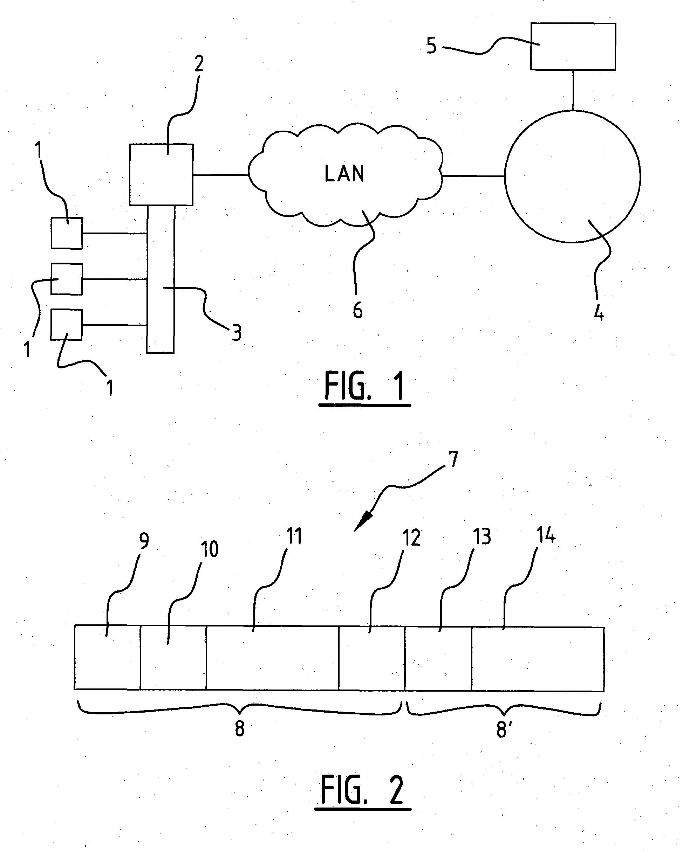

Figure 1 shows a schematic overview of the communication system of the present invention. In this system multiple patient communication devices 1, which are preferably substantially identical, are connected to a room controller 2 via a communication bus 3. In turn, room controller 2 is connected to a messaging/monitoring system 4. The latter system is capable of connecting to a plurality of room controllers 2 and to one or more nurse communication devices 5, such as handsets. Messaging/monitoring system 4 normally comprises separate but connected devices or components as will be discussed latter.

Communication between room controller 2 and messaging/monitoring system 4 are connected through a local area network (LAN) 6. Furthermore, the separate devices or components of the messaging/monitoring system are also connected to each other through LAN 6.

Communication bus 3 is of reduced complexity. It may comprise at least four wires; a ground wire, a power supply wire, a data wire, and a speech wire. This bus is used for all communication between patient communication device 1 and room controller 2.

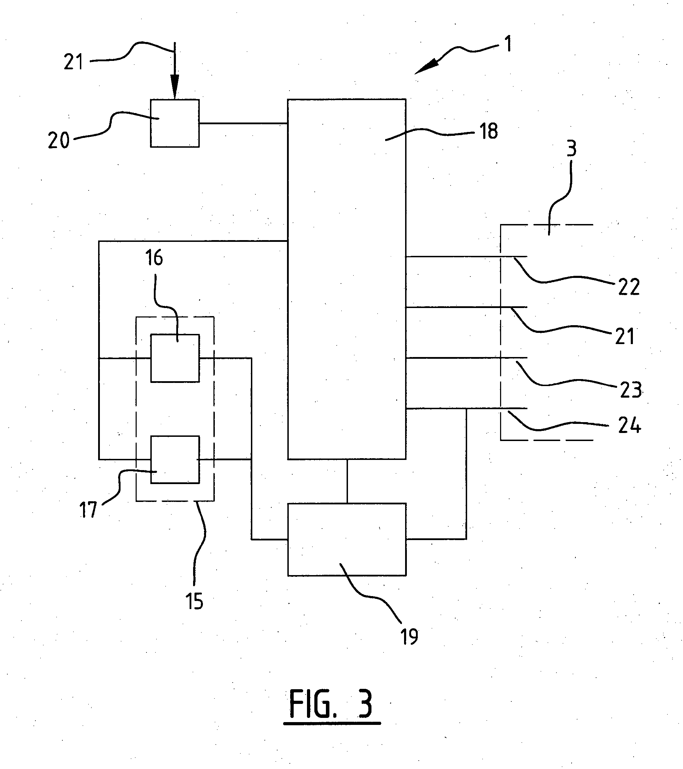

The communication between room controller 2 and patient communication device 1 is serial and is based on frames. The frames comprise logical high and/or low values (bits) and correspond to voltage differences between the data and ground wire of communication bus 3. Figure 2 illustrates the general build-up of a frame 7 used during the communication. Frame 7 comprises a first part 8 mainly for data from room controller 2 to the patient communication device 1, and a second part 8' for data from patient communication device 1 to room controller 2. The first bits(s) of first part 8 form a training sequence 9 for synchronisation between room controller 2 and patient communication device 1. This sequence is followed by a speech direction bit 10. Next, an address 11 of patient communication device 1 to which the data is directed is given. The part of the frame discussed so far is read by every patient communication device 1. The next segment 12 of first part 8 comprises data from-room controller 2 to the patient communication device 1. These data could include information for setting parameters in the patient communication device 1 such as active/inactive information which is used for determining the status of the speaker/microphone unit 15 in patient communication device 1, see figure 3. Segment 12 is only targeted at the addressed patient communication device and therefore need not be processed by other devices.

The second part 8' of frame 7 may start with another training sequence 13. It is followed by data 14 from patient communication device 1 to room controller 2. Data concerning the initialisation of speech communication, e.g. the speech initiation, can be placed here. A typical frame comprises 30 bits spread out over 15 ms, resulting in a communication bus running at 2kb/s. The voltage levels for the data and supply wire are typically about 5.5V.

Figure 3 illustrates an embodiment of a patient communication device 1. It comprises a speaker/microphone unit 15, comprising a speaker 16 and microphone 17, a microcontroller 18, a switch 19, and a speech communication initiation unit 20.

Microcontroller 18 interprets the incoming data on the data wire 21 of communication bus 3. It is fed by power supply wire 22 and grounded via ground wire 23. Incoming speech data from speech wire 24 is processed by switch 19. Depending on the speech direction, as determined by microcontroller 18 from the incoming data, the switch is set to relay the speech information to speaker 16 or to receive speech information from microphone 17. Switch 19 and or microcontroller 18 may be equipped with known measures to transform the speech information into the digital domain or to otherwise process the speech information.

Microcontroller 18 also extracts from the received data whether speaker/microphone unit 15 should be in the active or inactive mode.

Speech communication initiation unit 20 is externally operable by a patient, as indicated by arrow 21, and generates, via microcontroller 18, an initiation signal to be sent to room controller 2 asking for speech communication with a nurse.

Patient communication device 1 may comprise additional components related to other functionality, for instance digital radio, lighting, etc. This functionality can be integrated into microcontroller 18 or can be realized by dedicated components.

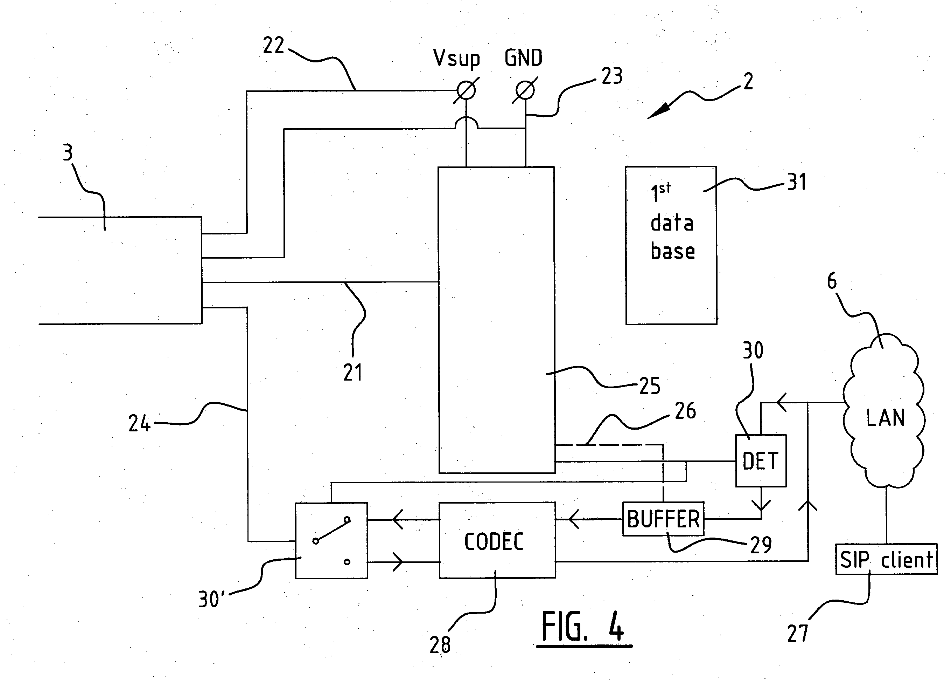

Figure 4 illustrates an embodiment of a room controller according to the present invention. Room controller 2 comprises a processing unit 25 for processing incoming and outgoing data streams from LAN 6 and communication bus 3. Supply wire 22 and ground wire 23 may be connected to an external power source (not shown). A SIP client 27 is included to set up a VoIP connection with a nurse communication device 5 using messaging/monitoring system 4. After having established such a connection, speech data in the form of RTP packets will be transferred between room controller 2 and messaging/monitoring system 4. A codec 28 is configured for converting the packets to another format, such as a compressed audio format or to an analog signal, for further transportation to communication bus 3. This operation is bi-directional. Additionally, a buffer 29 is provided to buffer speech data to avoid missing speech data when toggling between speech directions or between active and inactive modes. Buffer 29 may receive RTP packets either directly from LAN 6 or via processing unit 25, as indicated by dotted line 26.

A speech direction unit 30 is provided which incorporates a speech detector (not shown). When incoming speech is detected, speech direction unit 30 outputs a signal to processing unit 25 to set speech direction bit 10 to the appropriate value.

In figure 4, two paths are indicated for speech communication, a path from nurse to patient and vice versa. In practice however, data will be transferred over the same wire or line. These paths are therefore mainly for illustrative purposes, although a physical separation of the paths is not excluded. Furthermore, in figure 4 buffer 29 and speech direction unit 30 are arranged only in the path from nurse to patient. Once speech in this path is detected, speech direction unit provides a signal to processing unit 25 and switching element 30'. This latter element indicates the process that speech data is now converted from RTP packets into a compressed or analog format for transfer to room controller 2. If the speech direction is switched, codec 28 will convert the compressed or analog format into RTP packets for transfer to nurse communication device 5.

When a patient operates the speech initiation unit 20, a signal is received by processing unit 25, which may then set the active/inactive information of the relevant patient communication unit to active.

Room controller 2 also comprises a first database 31 which comprises a correlation between an address of a patient communication device and contact information for at least one nurse to be contacted when speech communication is desired by a patient.

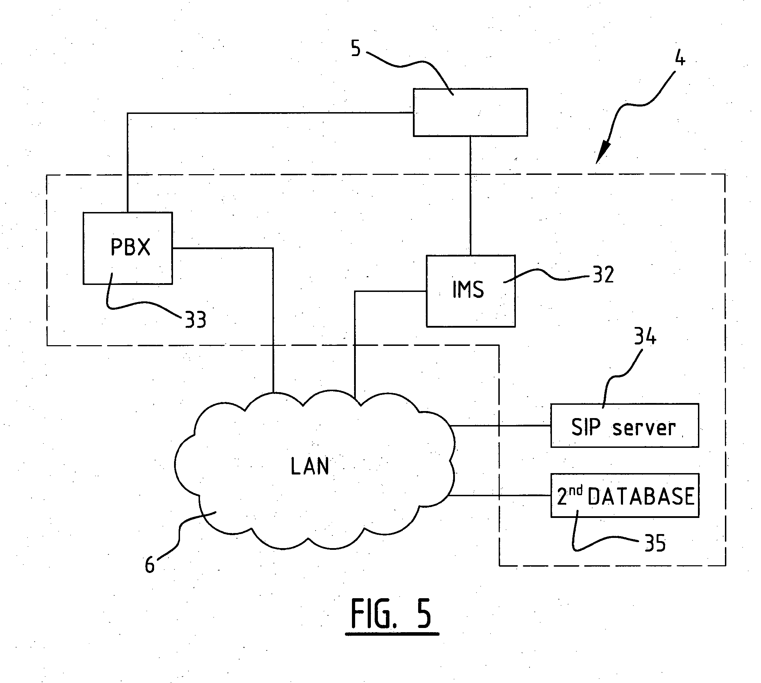

Figure 5 illustrates an embodiment of a messaging/monitoring system according to the present invention. Messaging/monitoring system 4 comprises an interactive message server (IMS) 32 for sending messages, preferably interactive messages, to nurse communication device 5. Such message could indicate that a particular patient would like to initiate speech communication. IMS 32 obtains the necessary information to construct the message from first database 31. For instance, contact information regarding which nurse communication device to contact, information regarding the patient or patient communication device requesting the speech communication, and contact information on how to contact the patient communication device are obtained via LAN 6.

Messaging/monitoring system 4 further comprises a private automatic branch exchange (PBX) 33 for establishing a connection between nurse communication device 5 and messaging/monitoring system 4. PBX 33 is also configured to convert speech data received from nurse communication device 5 into RTP packets for VoIP communication with room controller 2. However, this functionality may be incorporated in a separate unit or it may already be provided for in the nurse communication device 5, for instance when using VoWIFI handsets.

Messaging/monitoring system 4 also comprises a SIP server 34. SIP server 34 is able to set up a VoIP connection between PBX 33 and room controller 2 over LAN 6. To that end, it uses a second database 35 which comprises a correlation between the phone number dialled by nurse communication device 5 and the IP address of the relevant room controller 2. Second database 35 may also be comprised in SIP server 34.

Next, an exemplary operation of the present invention will be discussed.

If a patient wishes to speak to a nurse, he may operate the speech initiation unit 20, and an initiation signal will be generated by microcontroller 18. This signal, in digital form, will be sent to processing unit 25 of room controller 2. Here, processing unit 25 will set the active/inactive information of patient communication device 1 of the patient to active, enabling speaker/microphone unit 15. However, it may also be possible that processing unit 25 only sets the active/inactive information after a VoIP communication link has been established.

Room controller 2 knows the relative address of patient communication device 1 as this information is received in the frame structure of figure 2. It is therefore capable of sending a speech initiation request to IMS 32 over LAN 6. In this request, it will add contact information on the nurse to call and the phone number which the nurse in turn should call to contact the relevant patient communication device. This information is obtained by IMS 32 from first database 31. However, in some embodiments the information may also at least partly be obtained from second database 35.

Upon receipt of the request, IMS 32 will send an interactive message to the appropriate nurse comprising the aforementioned information. In addition to the request itself, which may be in text format suitable for the nurse to understand its purpose, the message contains the phone number which the nurse should dial.

If the nurse approves the request, she may dial the relevant phone number. This may also occur automatically. This outgoing phone call is received by PBX 33. This will trigger SIP server 34 to establish a VoIP communication link with room controller 2. Information is acquired from a second database 35, this time including a correlation between the phone number dialled by the nurse and the address needed for establishing the VoIP connection with room controller 2. This address is mostly the IP address of room controller 2. As part of the SIP protocol, an ASCII message may be sent to SIP client 27 of room controller 2 that comprises the relative address of patient communication device 1. This allows room controller 2 to properly link the incoming speech data to relevant patient communication device 1. There are various ways in which this information can be obtained. Firstly, the information can be deducted in room controller 2 by relating a recent initiation request to a newly started VoIP connection. Secondly, this information may be stored in the first and or second database 34. Thirdly, this information may be part of the communication from nurse communication device 5 to PBX 33.

As an example, the relative address of patient communication device 1 is 3, whereas the identification number of room controller 2 is 4876. This device corresponds to Mr. Jones for whom nurse Mrs. Smith is responsible. She can be reached under pager number 4567. In turn, Mrs. Smith needs to dial 06435678 to reach Mr. Jones. All this information is preferably part of first database 31. Furthermore, the IP address of room controller 2 is 192.144.3.2. Second database 35 will in this case comprise the association between 06435678, 192.144.3.2, and the relative address of patient communication device 2.

Hence, once nurse Smith calls 06435678, SIP server 34 will set up a VoIP connection with 192.144.3.2 and, as part of the SIP initiation, will sent the relative address of patient communication device 2 back to room controller 2.

Once the VoIP communication link has been established, the patient can speak. If Mrs. Smith speaks, speech detector 30 detects this speech and processing unit 25 will toggle the speech direction. In response, speech will no longer be directed from microphone 17 to room controller 2, but speech from Mrs. Smith will be directed via switch 19 to speaker 16. This is the result of microcontroller 18 receiving the speech bit and driving switch 19 accordingly.

In room controller 2, speech is not put on speech line 24 instantaneously. Instead, it is buffered by buffer 29. This will compensate for the time needed to toggle between the modes. If no speech is detected from Mrs. Smith for a predetermined amount of time, the speech direction is switched back by processing unit 25, after which the patient can speak to the nurse.

Instead of communication to a single patient communication device, messaging/monitoring system 4 may send speech to all patient communication devices which are connected to a given room controller or to all patient communication devices in the entire system. To that end, Mrs. Smith may call an alternative phone number, which was also sent by IMS 32. First 31 and/or second 35 database comprise the correlation between this phone number and the patients involved. If room controller 2 receives information during the SIP initiation that a patient communication device is to receive speech, other than the already activated device, processing unit 25 will first activate the relevant patient communication devices.

From the description above it has become apparent that with the present invention, speech between a patient and nurse is possible even using existing wiring having a limited amount of wires.

The invention has been described using embodiments thereof. It should be appreciated by the skilled person in the art that various modifications are possible without deviating from the scope of the invention which is defined in the appended claims.

For instance, a nurse communication device could be similar to a patient communication device. An example is a wall mounted unit arranged near a door. A nurse could operate this device to communicate with a patient in another room.

## Claims

1. A communication system, comprising:
a plurality of patient communication devices, each device comprising a patient speaker/microphone unit, and a speech communication initiation unit;
a room controller connectable to said plurality of patient communication devices using a communication bus which comprises distinct electrical wires, at least one of the distinct electrical wires forming a data line and a different distinct electrical wire forming a speech line; wherein the communication system is connectable to a nurse communication device, the room controller and each patient communication device being configured to communicate data over said data line and to enable speech communication over said speech line, the data communication being based on a serial protocol using frames of data, each frame comprising an address of a patient communication device relevant for data in that frame, and active/inactive information pertaining to the relevant patient communication device; wherein the patient speaker/microphone unit can be set in an active or inactive mode depending on the active/inactive information addressed to the corresponding patient communication device, and wherein the speech communication initiation unit is configured to send an initiation signal to the room controller over the data line for requesting speech communication with a nurse, and wherein the room controller is configured to set the active/inactive information to active for the relevant patient communication device once the request has been approved by the nurse, and to establish a speech communication link between the nurse communication device and the relevant patient communication device over the speech line.

2. The system according to claim 1, wherein the speech communication initiation unit comprises an electrical circuit with a switching element being configured to send an electrical initiation signal to the room controller when the switching element is operated by the patient.

3. The system according to claim 1 or 2, wherein the room controller and patient communication device are configured to communicate data comprising speech direction information over the communication bus, the speaker/microphone unit of the patient communication device being configured to toggle, in dependence of the speech direction information, between a speaker mode and a microphone mode;
wherein the speech direction information is preferably part of the data in a frame, and wherein more preferably each patient communication device is configured to process the speech direction information comprised in each frame irrespective of the patient communication device address.

4. The system according to claim 3, further comprising a speech direction unit for setting the speech direction information.

5. The system according to claim 4, wherein the speech direction unit is arranged in the room controller and is responsive to a command issued by the nurse for setting the speech direction from the nurse to the patient, and wherein the speech direction unit is configured to have a speech direction from patient to nurse as default speech direction,
wherein the room controller preferably comprises a speech detector for detecting speech of the nurse, and wherein the speech direction unit is configured to restore the speech direction to the direction from the patient to the nurse after a predetermined amount of time has lapsed in which the speech detector has not detected speech.

6. The system according to claim 4, wherein the speech direction unit is arranged in each patient communication device and is responsive to a command issued by the patient for setting the speech direction from the patient to the nurse, and wherein the speech direction unit is configured to have a speech direction from nurse to patient as default Speech direction;
wherein the room controller preferably comprises a speech detector for detecting speech of the patient, and wherein the speech direction unit is configured to restore the speech direction to the direction from the nurse to the patient after a predetermined amount of time has lapsed in which the speech detector has not detected speech.

7. The system according to claim 5 or 6, wherein:
the speech detector is configured to generate the command to be issued once speech from the nurse or patient is detected; or
the command to be issued is generated by means of an externally operable switchable element in the patient or nurse communication device.

8. The system according to any of the claims 5-7, wherein the room controller comprises a buffer for storing a predetermined amount of detected speech, the room controller being configured to deliver contents of the buffer as speech to the patient or nurse after a command for toggling the speech direction has been received from the nurse or patient, respectively.

9. The system according to any of the previous claims, wherein the room controller is configured to set the active/inactive information to active for the relevant patient communication device and to establish a speech communication link over the speech line between the nurse communication device and the patient communication device in response to an incoming request for speech communication from a nurse.

10. The communication system according to any of the previous claims, wherein the room controller is provided with a first database comprising a correlation between an address of a patient communication device and contact information for at least one nurse to be contacted when speech communication is desired by a patient.

11. The system according to claim 10, further comprising a messaging/monitoring system to which a plurality of said room controllers can be connected, the messaging/monitoring system being configured for receiving from the first database contact information for contacting at least one nurse, for receiving contact information from the room controller for contacting the patient communication device from which'an initiation signal has been issued by said nurse communication device, and for establishing a speech communication link via the room controller and via the speech line between the patient communication device from which the initiation signal was issued and a nurse communication device in accordance with the contact information for the at least one nurse and the contact information for the patient communication device.

12. The system according to claim 11, wherein the messaging/monitoring system comprises a SIP server and the room controller comprises a SIP client, the SIP server being configured to request the SIP client to establish a speech communication link between the patient communication device from which the initiation signal has been issued and the nurse communication device using VoIP;
wherein the room controller preferably comprises a codec for decoding VoIP data received from the nurse communication device into speech data to be transferred over the speech line to the addressed patient communication device, and for encoding speech received from the patent communication device over the speech line into speech data to be transferred to the nurse communication device via VoIP;
wherein the SIP server is preferably configured for maintaining a second database comprising a correlation between a phone number to be called by the nurse communication device for contacting a patient communication device and an address of this patient communication device or an address of the room controller to which this patient communication device is connected for enabling said VoIP communication.

13. The system according to any of the previous claims, wherein the room controller is configured to transmit speech communication from the nurse communication device to all connected patient communication devices when the speech communication is targeted at a predefined broadcasting address.

14. A room controller suitable for use in a system as defined in any of the previous claims.

15. A patient communication device suitable for use in a system as defined in any of the claims 1-13.

## Patentansprüche

1. Kommunikationssystem, aufweisend:
eine Mehrzahl von Patienten-Kommunikations-Vorrichtungen, wobei jede Vorrichtung eine Patienten-Lautsprecher/Mikrofon-Einheit und eine Sprach-Kommunikations-InitiierungsEinheit aufweist;
eine Raum-Steuereinrichtung, die mit der Mehrzahl von Patienten-KommunikationsVorrichtungen unter Verwendung eines Kommunikations-Busses, der getrennte elektrische Drähte aufweist, verbindbar ist, wobei mindestens einer der getrennten elektrischen Drähte eine Datenleitung und ein anderer getrennter elektrischer Draht eine Sprachleitung bildet;
wobei das Kommunikationssystem mit einer Pfleger-Kommunikationsvorrichtung verbindbar ist, wobei die Raum-Steuereinrichtung und jede Patienten-Kommunikationseinrichtung eingerichtet ist, Daten über die Datenleitung zu kommunizieren und eine Sprach-Kommunikation über die Sprachleitung zu ermöglichen, wobei die Daten-Kommunikation auf einem seriellen Protokoll, das Datenrahmen verwendet, basiert, wobei jeder Rahmen eine Adresse einer Patienten-Kommunikationsvorrichtung, die für Daten in diesem Rahmen relevant ist und eine Aktiv/Inaktiv-Information, die die relevante Patienten-Kommunikationsvorrichtung betrifft, aufweist;
wobei die Patienten-Lautsprecher/Mikrofon-Einheit abhängig von der an die entsprechende Patienten-Kommunikationsvorrichtung adressierte Aktiv/Inaktiv-Information in einen aktiven oder inaktiven Modus versetzt werden kann und wobei die Sprach-Kommunikations-Initiierungseinheit eingerichtet ist, ein Initiierungssignal über die Datenleitung an die Raum-Steuereinrichtung zu senden, um eine Sprach-Kommunikation mit einem Pfleger anzufordern, und wobei die Raum-Steuereinrichtung eingerichtet ist, die Aktiv/Inaktiv-Information für die relevante Patienten-Kommunikationsvorrichtung auf aktiv zu setzen, sobald die Anforderungen von dem Pfleger genehmigt wurde und eine Sprach-Kommunikations-Verbindung zwischen der Pfleger-Kommunikationsvorrichtung und der relevanten Patienten-Kommunikationsvorrichtung über die Sprachleitung aufzubauen.

2. System gemäß Anspruch 1, wobei die Sprach-Konununikations-Initiierungseinheit eine elektrische Schaltung mit einem Schaltelement aufweist, die eingerichtet ist, ein elektrisches Initiierungssignal an die Raum-Steuereinrichtung zu senden, wenn das Schalt-Element von dem Patienten betätigt wird.

3. System gemäß Anspruch 1 oder 2, wobei die Raum-Steuereinrichtung und die Patienten-Kommunikations-Vorrichtung eingerichtet sind, Daten, die Sprach-Richtungs-Informationen enthalten, über den Kommunikationsbus zu kommunizieren, wobei die Lautsprecher/Mikrofon-Einheit der Patienten-Kommunikationsvorrichtung eingerichtet ist, in Abhängigkeit der Sprach-Richtungs-Information zwischen einem Lautsprecher-Modus und eine Mikrofon-Modus umzuschalten;
wobei die Sprach-Richtungs-Information bevorzugt Teil der Daten in einem Rahmen ist und wobei bevorzugter jede Patienten-Kommunikationsvorrichtung eingerichtet ist, die Sprach-Richtungs-Information, die in jedem Rahmen enthalten ist, unabhängig von der Patienten-Kommunikationsvorrichtungs-Adresse zu verarbeiten.

4. System gemäß Anspruch 3, ferner aufweisend eine Sprach-Richtungs-Einheit zum Setzen der Sprach-Richtungs-Information.

5. System gemäß Anspruch 4, wobei die Sprach-Richtungs-Einheit in der Raum-Steuereinrichtung angeordnet ist und auf einen von dem Pfleger gegebenen Befehl zum Setzen der Sprach-Richtung von dem Pfleger zu dem Patienten reagiert und wobei die Sprach-Richtungs-Einheit eingerichtet ist, eine Sprach-Richtung von dem Patienten zu dem Pfleger als Standard-Sprach-Richtung zu haben,
wobei die Raum-Steuereinrichtung bevorzugt einen Sprach-Detektor zum Detektieren von Sprache des Pflegers aufweist und wobei die Sprach-Richtungs-Einheit eingerichtet ist, die Sprach-Richtung auf die Richtung von dem Patienten zu dem Pfleger zurückzusetzen, wenn eine vorgegebene Zeitdauer verstrichen ist, in der der Sprach-Detektor keine Sprache detektiert hat.

6. System gemäß Anspruch 4, wobei die Sprach-Richtungs-Einheit in jeder Patienten-Kommunikationsvorrichtung angeordnet ist und auf einen von dem Patienten gegebenen Befehl zum Setzen der Sprach-Richtung von dem Patienten zu dem Pfleger reagiert und wobei die Sprach-Richtungs-Einheit eingerichtet ist, eine Sprach-Richtung von dem Pfleger zu dem Patienten als Standard-Sprach-Richtung zu haben;
wobei die Raum-Steuereinrichtung bevorzugt einen Sprach-Detektor zum Detektieren von Sprache des Patienten aufweist und wobei die Sprach-Richtungs-Einheit eingerichtet ist, die Sprach-Richtung auf die Richtung von dem Pfleger zu dem Patienten zurückzusetzen, wenn eine vorgegebene Zeitdauer verstrichen ist, in der der Sprach-Detektor keine Sprache detektiert hat.

7. System gemäß Anspruch 5 oder 6, wobei:
der Sprach-Detektor eingerichtet ist, den zu gebenden Befehl zu erzeugen, sobald Sprache von dem Pfleger oder dem Patienten detektiert wird; oder
der zu gebenden Befehl mittels eines extern betätigbaren Schaltbahnelements in der Patienten- oder Pfleger-Kommunikationsvorrichtung erzeugt wird.

8. System gemäß irgendeinem der Ansprüche 5-7, wobei die Raum-Steuereinrichtung einen Puffer zum Speichern einer vorgegebenen Menge detektiert Sprache aufweist, wobei die Raum-Steuereinrichtung eingerichtet ist, Inhalte des Puffers als Sprache zu dem Patienten oder zu dem Pfleger zu liefern, nachdem ein Befehl zum Umschalten von dem Pfleger bzw. dem Patienten empfangen wurde.

9. System gemäß irgendeinem der vorhergehenden Ansprüche, wobei die Raum-Steuereinrichtung eingerichtet ist, die aktiv/inaktiv-Information für die relevante Patienten-Kommunikationsvorrichtung auf aktiv zu setzen und eine Sprach-Kommunikations-Verbindung über die Sprachleitung zwischen der Pfleger-Kommunikationsvorrichtung und der Patienten-Kommunikationsvorrichtung in Reaktion auf eine eingehende Anforderung einer Sprach-Kommunikation von einem Pfleger aufzubauen.

10. Kommunikationssystem gemäß irgendeinem der vorhergehenden Ansprüche, wobei die Raum-Steuereinrichtung mit einer ersten Datenbank versehen ist, die eine Korrelation zwischen einer Adresse einer Patienten-Kommunikations-Vorrichtung und Kontakt-Information für mindestens einen Pfleger, der zu kontaktieren ist, wenn ein Patient eine Sprach-Kommunikation wünscht, aufweist.

11. System gemäß Anspruch 10, ferner aufweisend ein Benachrichtigungs/Überwachungs-System, mit dem eine Mehrzahl der Raum-Steuereinrichtungen verbunden werden können, wobei das Benachrichtigungs/Überwachungs-System zum Empfangen von Kontakt-Information zum Kontaktieren mindestens eines Pflegers der ersten Datenbank, zum Empfangen von Kontaktinformation zum Kontaktieren der Patienten-Kommunikations-Vorrichtung, von der ein Initiation-Signal herausgegeben wurde, durch die Pfleger-Kommunikations-Vorrichtung von der Raum-Steuereinrichtung und zum Aufbauen einer Sprach-Kommunikationsverbindung über die Raum-Steuereinrichtung und über die Sprachleitung zwischen der Patienten-Kommunikationsvorrichtung, von der das Initiierungssignal herausgegeben wurde, und einer Pfleger-Kommunikationsvorrichtung gemäß der Kontaktinformation für den mindestens einen Pfleger und der Kontaktinformation für die Patienten-Kommunikationsvorrichtung eingerichtet ist.

12. System gemäß Anspruch 11, wobei das Benachrichtigungs/Überwachungs-System einen SIP-Server aufweist und die Raum-Steuereinrichtung einen SIP-Client aufweist, wobei der SIP-Server eingerichtet ist, von dem SIP-Client anzufordern, eine Sprach-Kommunikationsverbindung zwischen der Patienten-Kommunikationsvorrichtung, von der das Initiierungssignal herausgegeben wurde, und der Pfleger-Kommunikationsvorrichtung unter Verwendung von VoIP aufzubauen;
wobei die Raum-Steuereinrichtung vorzugsweise einen Codec zum Dekodieren von von der Pfleger-Kommunikationsvorrichtung empfangener VoIP-Daten in über die Sprach-Leitung an die adressierte Patienten-Kommunikationsvorrichtung zu übertragende Sprachdaten und zum Codieren von über die Sprachleitung von der Patienten-Kommunikationsvorrichtung empfangener Daten in über VoIP an die Pfleger-Kommunikationsvorrichtung zu übertragende Sprachdaten aufweist;
wobei der SIP-Server vorzugsweise zum Führen einer zweiten Datenbank eingerichtet ist, die eine Korrelation zwischen einer Telefonnummer, die von der Pfleger-Kommunikationsvorrichtung zum Kontaktieren einer Patienten-Kommunikationsvorrichtung anzurufen ist, und einer Adresse dieser Patienten-Kommunikationsvorrichtung oder einer Adresse der Raum-Steuereinrichtung, mit der diese Patienten-Kommunikationsvorrichtung verbunden ist zum Ermöglichen der VoIP-Kommunikation aufweist.

13. System gemäß irgendeinem der vorhergehenden Ansprüche, wobei die Raum-Steuereinrichtung eingerichtet ist, eine Sprach-Kommunikation von der Pfleger-Kommunikationsvorrichtung an alle verbundenen Patienten-Kommunikationsvorrichtungen zu senden, wenn die Sprach-Kommunikation an eine vorgegebene Rundsende-Adresse gerichtet ist.

14. Raum-Steuereinrichtung, geeignet zur Verwendung in einem System wie in irgendeinem der vorhergehenden Ansprüche definiert.

15. Patienten-Kommunikationsvorrichtung, geeignet zur Verwendung in einem wie in irgendeinem der Ansprüche 1-13 definierten System.

## Revendications

1. Système de communication, comprenant :
une pluralité de dispositifs de communication de patient, chaque dispositif comprenant une unité de haut-parleur / microphone de patient, et une unité d'initiation de communication vocale ;
un contrôleur de salle pouvant être connecté à ladite pluralité de dispositifs de communication de patient, en utilisant un bus de communication qui comprend des fils électriques distincts, au moins l'un des fils électriques distincts formant une ligne de données et un fil électrique distinct différent formant une ligne vocale ;
dans lequel le système de communication peut être connecté à un dispositif de communication d'infirmière, le contrôleur de salle et chaque dispositif de communication de patient étant configurés de manière à communiquer des données sur ladite ligne de données et à permettre une communication vocale sur ladite ligne vocale, la communication de données étant basée sur un protocole sériel utilisant des trames de données, chaque trame comprenant une adresse d'un dispositif de communication de patient pertinent pour des données dans cette trame, et des informations actives / inactives connexes au dispositif de communication de patient pertinent ; dans lequel l'unité de haut-parleur / microphone de patient peut être définie dans un mode actif ou inactif selon les informations actives / inactives adressées au dispositif de communication de patient correspondant, et dans lequel l'unité d'initiation de communication vocale est configurée de manière à envoyer un signal d'initiation au contrôleur de salle sur la ligne de données en vue de demander une communication vocale avec une infirmière, et dans lequel le contrôleur de salle est configuré de manière à définir les informations actives / inactives sur des informations actives pour le dispositif de communication de patient pertinent dès lors que la demande a été approuvée par l'infirmière, et à établir une liaison de communication vocale entre le dispositif de communication d'infirmière et le dispositif de communication de patient pertinent sur la ligne vocale.

2. Système selon la revendication 1, dans lequel l'unité d'initiation de communication vocale comprend un circuit électrique doté d'un élément de commutation, qui est configuré de manière à envoyer un signal d'initiation électrique au contrôleur de salle lorsque l'élément de commutation est actionné par le patient.

3. Système selon la revendication 1 ou 2, dans lequel le contrôleur de salle et le dispositif de communication de patient sont configurés de manière à communiquer des données comprenant des informations de direction de parole sur le bus de communication, l'unité de haut-parleur / microphone du dispositif de communication de patient étant configurée de manière à basculer, en fonction des informations de direction de parole, entre un mode de haut-parleur et un mode de microphone ;
dans lequel les informations de direction de parole font de préférence partie de données dans une trame, et dans lequel, plus préférablement, chaque dispositif de communication de patient est configuré de manière à traiter les informations de direction de parole incluses dans chaque trame, quelle que soit l'adresse du dispositif de communication de patient.

4. Système selon la revendication 3, comprenant en outre une unité de direction de parole destinée à définir des informations de direction de parole.

5. Système selon la revendication 4, dans lequel l'unité de direction de parole est agencée dans le contrôleur de salle et répond à une commande émise par l'infirmière en vue de définir la direction de parole, de l'infirmière vers le patient, et dans lequel l'unité de direction de parole est configurée de manière à présenter une direction de parole allant du patient vers l'infirmière en tant que direction de parole par défaut ;
dans lequel le contrôleur de salle comprend de préférence un détecteur de parole destiné à détecter une parole de l'infirmière, et dans lequel l'unité de direction de parole est configurée de manière à restaurer la direction de parole sur la direction allant du patient à l'infirmière, suite à l'expiration d'une durée prédéterminée dans laquelle le détecteur de parole n'a pas détecté de parole.

6. Système selon la revendication 4, dans lequel l'unité de direction de parole est agencée dans chaque dispositif de communication de patient et répond à une commande émise par le patient en vue de définir la direction de parole, du patient vers l'infirmière, et dans lequel l'unité de direction de parole est configurée de manière à présenter une direction de parole, allant de l'infirmière vers le patient, en tant que direction de parole par défaut ;
dans lequel le contrôleur de salle comprend de préférence un détecteur de parole destiné à détecter une parole du patient, et dans lequel l'unité de direction de parole est configurée de manière à restaurer la direction de parole, sur la direction allant de l'infirmière vers le patient, suite à l'expiration d'une durée prédéterminée dans laquelle le détecteur de parole n'a pas détecté de parole.

7. Système selon la revendication 5 ou 6, dans lequel :
le détecteur de parole est configuré de manière à générer la commande à émettre dès lors qu'une parole provenant de l'infirmière ou du patient est détectée ; ou
la commande à émettre est générée au moyen d'un élément commutable exploitable depuis l'extérieur dans le dispositif de communication d'infirmière ou de patient.

8. Système selon l'une quelconque des revendications 5 à 7, dans lequel le contrôleur de salle comprend une mémoire tampon destinée à stocker une quantité prédéterminée de parole détectée, le contrôleur de salle étant configuré de manière à délivrer des contenus de la mémoire tampon, sous la forme de parole, au patient ou à l'infirmière, après qu'une commande de basculement de la direction de parole a été reçue en provenance de l'infirmière ou du patient, respectivement.

9. Système selon l'une quelconque des revendications précédentes, dans lequel le contrôleur de salle est configuré de manière à définir les informations actives / inactives sur des informations actives pour le dispositif de communication de patient pertinent et à établir une liaison de communication vocale sur la ligne vocale entre le dispositif de communication d'infirmière et le dispositif de communication de patient, en réponse à une demande entrante concernant une communication vocale en provenance d'une infirmière.

10. Système de communication selon l'une quelconque des revendications précédentes, dans lequel le contrôleur de salle est doté d'une première base de données comprenant une corrélation entre une adresse d'un dispositif de communication de patient et des informations de contact pour au moins une infirmière devant être contactée lorsqu'une communication vocale est souhaitée par un patient.

11. Système selon la revendication 10, comprenant en outre un système de messagerie / surveillance auquel une pluralité desdits contrôleurs de salle peut être connectée, le système de messagerie / surveillance étant configuré de manière à recevoir, en provenance de la première base de données, des informations de contact pour contacter au moins une infirmière, à recevoir des informations de contact en provenance du contrôleur de salle pour contacter le dispositif de communication de patient à partir duquel un signal d'initiation a été émis par ledit dispositif de communication d'infirmière, et à établir une liaison de communication vocale par le biais du contrôleur de salle et par le biais de la ligne vocale entre le dispositif de communication de patient à partir duquel le signal d'initiation a été émis et un dispositif de communication d'infirmière selon les informations de contact pour ladite au moins une infirmière et les informations de contact pour le dispositif de communication de patient.

12. Système selon la revendication 11, dans lequel le système de messagerie / surveillance comprend un serveur de protocole SIP et le contrôleur de salle comprend un dispositif client de protocole SIP, le serveur de protocole SIP étant configuré de manière à demander au dispositif client de protocole SIP d'établir une liaison de communication vocale entre le dispositif de communication de patient à partir duquel le signal d'initiation a été émis et le dispositif de communication d'infirmière, en utilisant le protocole VoIP ;
dans lequel le contrôleur de salle comprend de préférence un codeur-décodeur pour décoder des données de protocole VoIP reçues en provenance du dispositif de communication d'infirmière en des données vocales à transférer sur la ligne vocale au dispositif de communication de patient adressé, et pour coder une parole reçue en provenance du dispositif de communication de patient sur la ligne vocale en des données vocales à transférer au dispositif de communication d'infirmière par le biais du protocole VoIP ;
dans lequel le serveur de protocole SIP est de préférence configuré de manière à maintenir une seconde base de données comprenant une corrélation entre un numéro de téléphone devant être appelé par le dispositif de communication d'infirmière en vue de contacter un dispositif de communication de patient et une adresse de ce dispositif de communication de patient, ou une adresse du contrôleur de salle auquel ce dispositif de communication de patient est connecté, en vue de permettre ladite communication VoIP.

13. Système selon l'une quelconque des revendications précédentes, dans lequel le contrôleur de salle est configuré de manière à transmettre une communication vocale, du dispositif de communication d'infirmière à tous les dispositifs de communication de patients connectés, lorsque la communication vocale cible une adresse de diffusion prédéfinie.

14. Contrôleur de salle pertinent en vue d'une utilisation dans un système selon l'une quelconque des revendications précédentes.

15. Dispositif de communication de patient pertinent en vue d'une utilisation dans un système selon l'une quelconque des revendications 1 à 13.
